# EUROPÄISCHE PATENTSCHRIFT

(11) **EP 3 682 197 B1**
(45) Veröffentlichungstag und Bekanntmachung des Hinweises auf die Patenterteilung: **12.10.2022**
(21) Anmeldenummer: 18759074.0
(22) Anmeldetag: 16.08.2018
(51) Int. Cl.: G01D 11/24, H01Q 1/50, H01Q 7/00

(54) **SYSTEM, UMFASSEND EINEN METALLISCHEN KÖRPER UND EINE SENSORVORRICHTUNG MIT EINER OPTIMIERTEN ANTENNENEINHEIT**
SYSTEM COMPRISING A METALLIC BODY AND A SENSOR DEVICE WITH AN OPTIMISED ANTENNA UNIT
SYSTÈME COMPRENANT UN CORPS MÉTALLIQUE ET UN DISPOSITIF CAPTEUR AVEC UNE UNITÉ D'ANTENNE OPTIMISÉE

(30) Priorität: 12.09.2017 DE 102017216043
(43) Veröffentlichungstag der Anmeldung: 22.07.2020
(73) Patentinhaber: Robert Bosch GmbH, 70442 Stuttgart (DE)
(72) Erfinder: GAIER, Stefan, 70599 Stuttgart (DE)
(86) Internationale Anmeldenummer: PCT/EP2018/072279
(87) Internationale Veröffentlichungsnummer: WO 2019/052771

(56) Entgegenhaltungen:
- EP-A1- 2 833 476
- WO-A1-2014/195309
- LIU HAITAO ET AL: "Electrically Small Loop Antenna Standing on Compact Ground in Wireless Sensor Package", IEEE ANTENNAS AND WIRELESS PROPAGATION LETTERS, Bd. 15, 6. Mai 2015 (2015-05-06), Seiten 76-79, XP011597747, ISSN: 1536-1225, DOI: 10.1109/LAWP.2015.2430360 [gefunden am 2016-02-03]

## Beschreibung

### Stand der Technik

Die Erfindung betrifft ein System mit einem im Wesentlichen metallischen Körper, welcher eine Ausnehmung aufweist. In diese Ausnehmung ist eine Sensorvorrichtung eingebracht, wobei die Sensorvorrichtung eine Sensoreinheit, eine Antenneneinheit und ein Massepotential aufweist. Des Weiteren ist die Antenneneinheit elektrisch mit dem Massepotential verbunden ist.

Solch ein System ist beispielsweise in der Offenlegungsschrift WO 2014/195309 A1 offenbart. In dieser ist eine Leiterplatte offenbart, auf welcher mehrere Sensoren beabstandet zueinander angeordnet sind, um Messwerte über die ganze Länge einer Walze ermitteln zu können. Die Messeinrichtung wird hierfür in eine Ausnehmung des Walzenkörpers eingebracht und dort eingespritzt. Als Sensoren können beispielsweise Temperatursensoren, Beschleunigungssensoren oder Drehratensensoren dienen. Mittels der Temperatursensoren können beispielsweise Temperaturwerte der Walzenoberfläche erfasst werden können. Anhand der erfassten Temperaturwerte kann beispielsweise die Walzenlagerung überwacht werden oder auch auf Prozessparameter beim Walzvorgang geschlossen werden. Des Weiteren kann beispielsweise mittels von den Beschleunigungssensor und/oder Drehratensensoren erfassten Messwerten auf einen Betriebszustand und eine Laufzeit der Walze oder auch auf einen Lagerzustand der Walze, wie beispielsweise eine Unwucht, geschlossen werden.

Des Weiteren weist die Leiterplatte einen Mikroprozessor auf, welcher eine drahtlose Kommunikation, beispielsweise ein Aussenden der Messwerte, ermöglicht. Für die drahtlose Kommunikation weist der Mikroprozessor daher eine entsprechende Antenneneinheit auf, welche typischerweise mit einem Massepotential der Leiterplatte verbunden ist. Der metallische Körper wirkt jedoch abschirmend auf die Sensorvorrichtung, wodurch die Abstrahlung von drahtlosen Signalen mittels des Mikroprozessors erschwert wird.

### Offenbarung der Erfindung

Die Erfindung betrifft ein System mit einem im Wesentlichen metallischen Körper, welcher eine Ausnehmung aufweist. In diese Ausnehmung ist eine Sensorvorrichtung eingebracht, wobei die Sensorvorrichtung eine Sensoreinheit, eine Antenneneinheit und ein Massepotential aufweist. Des Weiteren ist die Antenneneinheit elektrisch mit dem Massepotential verbunden.

Ein Kern der Erfindung besteht darin, dass das Massepotential der Sensorvorrichtung elektrisch mit dem metallischen Körper verbunden ist. Vorteilhaft ist hierbei, dass durch die elektrische Verbindung zwischen der Antenneneinheit und dem metallischen Körper über das Massepotential der Sensorvorrichtung die Antenneneffizienz gesteigert werden kann. Dies liegt darin begründet, dass sich die elektromagnetischen Feldlinien besser von der Sensorvorrichtung und dem metallischen Körper ablösen können, da sie galvanisch miteinander verbunden sind. Die elektrische Verbindung zwischen dem Massepotential der Sensorvorrichtung und dem metallischen Körper ist dabei unproblematisch bezüglich elektrostatischer Entladung, da die Verbindung auf das Massepotential der Sensorvorrichtung erfolgt und nicht auf einen Eingangs-Pin einer aktiven Schaltungskomponente wie die Antenneneinheit oder die Sensoreinheit.

Unter im Wesentlichen metallischen Körper ist zu verstehen, dass der Körper hauptsächlich aus einem metallischen Material besteht, jedoch auch geringfügig andere, nicht metallische Inhaltsstoffe aufweisen kann. So können die nicht metallischen Inhaltstoffe beispielsweise Verunreinigungen darstellen. Allerdings kann der metallische Körper beispielsweise auch Kunststoffteile aufweisen, welche z. B als Kanten- oder Eckenschutz für den metallischen Körper dienen oder auch andere Aufgaben wie eine Abdichtung gegenüber der Umgebung ermöglichen.

Unter elektrischer Verbindung ist eine galvanische Verbindung, das heißt eine metallische Verbindung, zwischen dem metallischen Körper und dem Massepotential zu verstehen.

Die Ausnehmung kann beispielsweise eine Bohrung, ein Sackloch, eine Mulde oder ein Durchbruch sein.

Es ist zudem denkbar, dass die Sensorvorrichtung zusätzlich noch weitere Massepotentiale aufweist, welche ebenfalls zum einen mit der Antenneneinheit und zum anderen mit dem metallischen Körper elektrisch verbunden sind.

Eine Ausgestaltung des erfindungsgemäßen Systems sieht vor, dass ein elektrisch leitfähiges Verbindungselement zwischen dem Massepotential der Sensorvorrichtung und dem metallischen Körper angeordnet ist.

Vorteilhaft ist hierbei, dass dies eine einfache Möglichkeit darstellt, eine elektrische Verbindung zwischen dem metallischen Körper und dem Massepotential der Sensorvorrichtung herzustellen. Vorteilhafterweise besteht zwischen dem metallischen Körper und dem Massepotential bzw. den Massepotentialen somit eine galvanische Verbindung.

Eine Ausgestaltung des erfindungsgemäßen Systems sieht vor, dass das elektrisch leitfähige Verbindungselement ein Federelement ist, insbesondere ein metallisches Federelement.

Vorteilhaft ist hierbei, dass das Federelement eine gute elektrische Verbindung zwischen dem metallischen Körper und dem Massepotential der Sensorvorrichtung ermöglicht. Dies ist insbesondere von Vorteil, wenn die Sensorvorrichtung in die Ausnehmung des metallischen Körpers eingebracht wird, da durch die Flexibilität des Federelements z. B. Herstellungstoleranzen für die Maße der Ausnehmung des metallischen Körpers und/oder der Sensorvorrichtung ausgleichbar sind.

Gemäß einer Ausgestaltung des erfindungsgemäßen Systems ist vorgesehen, dass das Verbindungselement und die Antenneneinheit in der Nähe einer Öffnung der Ausnehmung angeordnet sind und insbesondere an diese Öffnung angrenzen.

Vorteilhaft ist hierbei zum einen, dass durch die entsprechende Anordnung der Antenneneinheit die Abschirmwirkung durch den metallischen Körper möglichst gering gehalten wird. Zum anderen ist es von Vorteil, dass durch diese Anordnung die elektrische Verbindung zwischen der Antenneneinheit und dem metallischen Körper über das Massepotential der Sensorvorrichtung möglichst kurz ist. Dieser kurze Weg hat zur Folge, dass es keine elektromagnetischen Verlustströme gibt und somit die Abstrahlung der Antenneneinheit weiter verbessert werden kann. Je näher also die metallische Verbindung, wie beispielsweise das Federelement, und die Antenneneinheit an der Oberfläche des metallischen Körpers liegen, desto besser ist die Abstrahlung der Antenneneinheit.

Unter angrenzen ist hierbei zu verstehen, dass die Antenneneinheit und das Verbindungselement möglichst nahe an der äußeren Oberfläche des Körpers, jedoch noch in der Ausnehmung, angeordnet sind und somit nicht aus der Öffnung herausragen. Durch die Anordnung des Systems innerhalb der Ausnehmung kann beispielsweise eine Kollision mit dem Walzenlager vermieden werden.

Gemäß einer Ausgestaltung des erfindungsgemäßen Systems ist vorgesehen, dass die Sensorvorrichtung und/oder das Massepotential der Sensorvorrichtung derartig ausgestaltet sind, dass das Massepotential direkt mit dem metallischen Körper elektrisch verbunden ist.

Vorteilhaft ist hierbei, dass die Sensorvorrichtung kein zusätzliches Bauelement für die elektrische Verbindung zwischen dem Massepotential der Sensorvorrichtung und dem metallischen Körper aufweisen muss. Da das Massepotential der Sensorvorrichtung typischerweise bereits vorhanden ist, ist somit nur eine entsprechende Ausgestaltung notwendig. Das kann beispielsweise durch eine leicht konische Leiterplattenform ermöglicht werden, bei welcher eine direkt galvanische Kontaktierung der Massefläche auf der Leiterplatte mit dem metallischen Körper stattfindet. Dies ähnelt somit einer Einpresstechnik für Metallstifte in Leiterplatten.

In einer Ausführungsform des erfindungsgemäßen Systems ist vorgesehen, dass die Antenneneinheit als Loop-Antenne ausgestaltet ist.

Die Loop-Antenne hat sich als geeigneter Antennentyp für die Einbringung in eine Ausnehmung eines Körpers erwiesen, bei welchem eine Abschirmung durch den Körper erfolgt. Loop-Antennen sind in verschiedenen Formen als SMDbestückbare Keramikkomponenten verfügbar.

Vorteilhaft ist hierbei, dass eine solche Loop-Antenne derartig ausgestaltet sein kann, dass diese eine Strahlungscharakteristik aufweist, welche eine gute Abstrahlung aus der durch den metallischen Körper abgeschirmten Ausnehmung heraus ermöglichen kann. Die Erfindung ermöglicht somit die Anpassung und Optimierung des Loop-Antennen-Konzepts für den Einsatz in Ausnehmungen von metallischen Körpern, wie beispielsweise Bohrlöchern.

In einer Ausführungsform des erfindungsgemäßen Systems ist vorgesehen, dass die Sensorvorrichtung von einem Gehäuse umgeben ist, wobei das Gehäuse eine derartig ausgestaltete Aussparung aufweist, dass das Massepotential durch diese Aussparung hindurch elektrisch mit dem metallischen Körper verbunden ist.

Vorteilhaft ist hierbei, dass das Gehäuse die Sensorvorrichtung vor äußeren Einflüssen schützen kann. Hierdurch kann die Lebensdauer der Sensorvorrichtung verlängert werden. Durch die Aussparung im Gehäuse, kann jedoch trotzdem die elektrische Verbindung zwischen dem Massepotential der Sensorvorrichtung und dem metallischen Körper erfolgen, mittels welcher die Antennenleistung verbessert werden kann.

In einer vorteilhaften Ausführungsform ist vorgesehen, dass die Sensoreinheit einen Temperatursensor aufweist, welcher thermisch mit dem Massepotential verbunden ist.

Vorteilhaft ist hierbei, dass die elektrische Verbindung zwischen dem Massepotential der Sensorvorrichtung und dem metallischen Körper typischerweise auch eine gute thermische Verbindung darstellt. Hierdurch kann die Temperatur des metallischen Körpers somit durch den Temperatursensor sehr genau bestimmt werden bzw. kann eine Temperaturänderung des metallischen Körpers zeitnah von dem Temperatursensor erfasst werden.

In einer vorteilhaften Ausführungsform ist vorgesehen, dass der metallische Körper als Walzenkörper ausgestaltet ist.

Vorteilhaft ist hierbei, dass über die Sensorvorrichtung der Walzenkörper überwacht werden kann. Hierbei ist insbesondere eine drahtlose Kommunikation über die Antenneneinheit von Vorteil, da keine zusätzlichen Kabel benötigt werden, um beispielsweise Messdaten auszusenden. Diese Kabel wären insbesondere bei einer rotierenden Walze äußerst störend.

### Zeichnungen

Fig. 1 zeigt ein erstes Ausführungsbeispiel eines erfindungsgemäßen Systems.
Fig. 2 zeigt ein zweites Ausführungsbeispiel eines erfindungsgemäßen Systems.

### Beschreibung von Ausführungsbeispielen

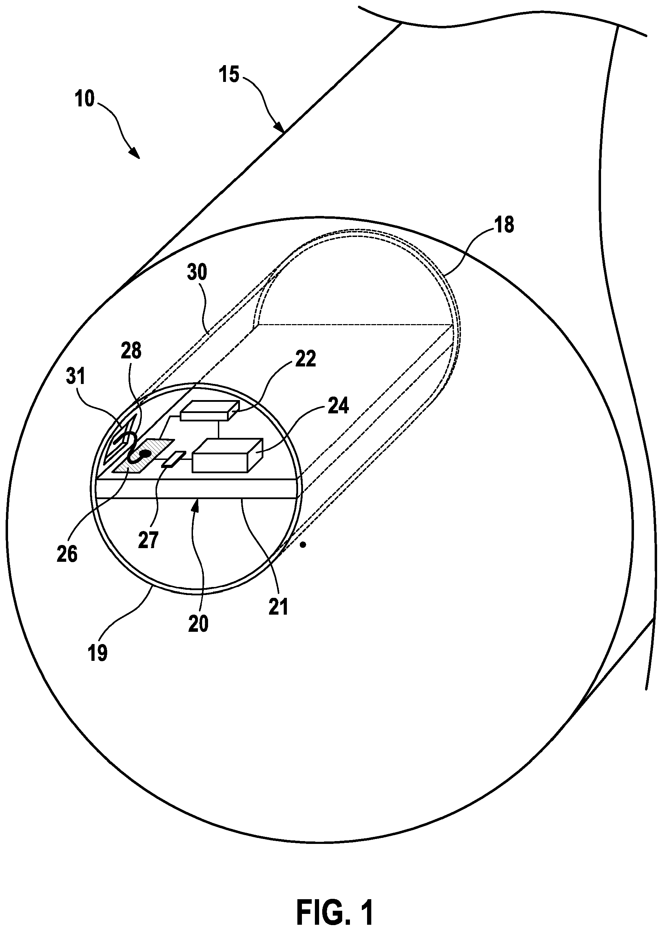

Fig. 1 zeigt ein erstes Ausführungsbeispiel eines erfindungsgemäßen Systems. Dargestellt ist ein System 10. Das System 10 weist einen metallischen Körper 15 auf. Dieser metallische Körper 15 kann beispielsweise ein Walzenkörper sein. Der metallische Körper 15 weist wiederum eine Ausnehmung 18 auf. Die Ausnehmung 18 kann beispielsweise eine Bohrung im metallischen Körper 15 sein, welche sich beispielsweise auf einer Stirnseite des Walzenkörpers befindet. In die Ausnehmung 18 ist eine von einem optionalen Gehäuse 30 umgebene Sensorvorrichtung 20 eingebracht. Die Sensorvorrichtung 20 ist hierbei insbesondere über eine Öffnung 19 der Ausnehmung 18 in die Ausnehmung 18 eingebracht worden.

Die Sensorvorrichtung 20 weist eine Sensoreinheit 22, eine Antenneneinheit 24 und ein Massepotential 26 auf. Die Sensoreinheit 22, die Antenneneinheit 24 und das Massepotential 26 sind hierbei insbesondere auf einer Leiterplatte 21 der Sensorvorrichtung 20 angeordnet. Das Massepotential 26 ist als elektrisch leitfähige Metallschicht auf der Leiterplatte 21 ausgebildet und sowohl mit der Antenneneinheit 24 als auch mit der Sensoreinheit 22 verbunden. Die Verbindung zwischen dem Massepotential 26 und der Antenneneinheit 24 ist eine elektrische Verbindung. Diese Verbindung erfolgt über einen Kondensator 27. Die Sensoreinheit 22 weist beispielsweise einen Temperatursensor auf, welcher thermisch mit dem Massepotential 26 verbunden ist. Die Sensoreinheit 22 könnte zusätzlich oder alternativ auch beispielsweise einen

Beschleunigungssensor oder Drehratensensor aufweisen, bei welchen eine thermische Verbindung zum Massepotential 26 entsprechend nicht notwendig ist. Die Antenneneinheit 24 ist des Weiteren als Loop-Antenne ausgestaltet, wodurch die Strahlungscharakteristik der Antenneneinheit 24 derartig einstellbar ist, dass eine Abstrahlung aus der Ausnehmung 18 heraus besonders gut möglich ist.

Das Massepotential 26 der Sensorvorrichtung 20 ist des Weiteren über ein elektrisch leitfähiges Verbindungselement 28 mit dem metallischen Körper 15 verbunden. Das Verbindungselement 28 kann beispielsweise als Federelement ausgestaltet sein. Das Federelement ist hierbei s-förmig ausgestaltet. Alternativ ist allerdings auch beispielsweise eine spiralförmige Ausgestaltung des Federelements denkbar. Das Federelement ist derartig angeordnet und ausgestaltet, dass es eine Anpresskraft aufweist, mit welcher das Federelement gegen die Oberfläche der Ausnehmung 18 drückt, wodurch eine gute elektrische und folglich auch thermische Verbindung zwischen dem Massepotential 26 und dem metallischen Körper 15 ermöglicht wird. Hierbei ist das Federelement beispielsweise auf dem Massepotential entsprechend angelötet. Je näher das Federelement an der vorderen, d. h. der Öffnung zugewandten Ecke der Leiterplatte mit dem Massepotential 26 verbunden ist, desto besser ist dies für das abgestrahlte HF-Signal der Antenneneinheit 24.

Weist die Sensoreinheit 22 einen Temperatursensor auf, welcher die Temperatur des metallischen Körpers 15 erfassen soll, weist insbesondere das Verbindungselement 28 ein Material mit guter Wärmeleitfähigkeit auf.

Das Gehäuse 30 ist in diesem Ausführungsbeispiel derartig ausgestaltet, dass dieses die Ausnehmung 18 voll ausfüllt, also insbesondere ein Querschnitt des Gehäuses 30 einem Querschnitt der Ausnehmung 18 bzw. insbesondere der Öffnung 19 entspricht. Des Weiteren weist das Gehäuse 30 eine Aussparung 31 auf, durch welche das Massepotential 26 mit dem metallischen Körper 15 verbunden ist.

Außerdem schließt das Gehäuse 30 insbesondere mit der Stirnseite des Körpers 15 ab und dichtet somit die Ausnehmung 18 gegenüber außen ab.

In einem weiteren, bildlich nicht dargestellten Ausführungsbeispiel kann anstatt des Gehäuses 30 oder zusätzlich zum Gehäuse 30 ein Verschlusselement vorgesehen sein, welches die Ausnehmung 18 bzw. Öffnung 19 verschließt.

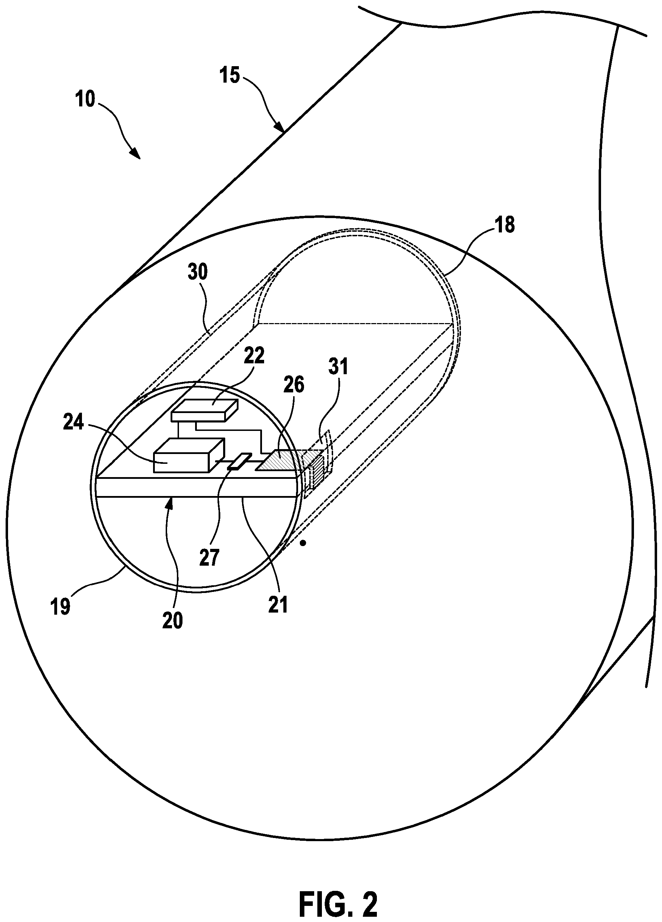

Fig. 2 zeigt ein zweites Ausführungsbeispiel eines erfindungsgemäßen Systems. Dargestellt ist ein System 11, welches ähnlich zum erfindungsgemäßen System 10 nach Fig. 1 ausgestaltet ist. Das System 11 unterscheidet sich von dem System 10 nach Fig. 1 lediglich darin, dass kein separates elektrisch leitfähiges Verbindungselement 28 zwischen dem Massepotential 26 und dem metallischen Körper 15 angeordnet ist, sondern dass die Sensorvorrichtung 20 und das Massepotential 26 derartig ausgestaltet sind, dass das Massepotential 26 direkt mit dem metallischen Körper 15 elektrisch verbunden ist. Dabei ist eine Metallschicht, welche das Massepotential 26 bildet, von der Oberseite der Leiterplatte 21 über deren Kante an eine Seitenfläche der Leiterplatte 21 geführt, von welcher aus das Massepotential 26 in direkter Verbindung zum metallischen Körper 15 steht. Das optionale Gehäuse 30 weist an dieser Verbindungsstelle dann wiederum eine entsprechende Aussparung 31 auf.

In einem weiteren, bildlich nicht dargestellten Ausführungsbeispiel kann beispielsweise die Leiterplatte 21 der Sensorvorrichtung 20 derartig konisch ausgestaltet sein, dass das auf der Oberfläche der Leiterplatte 21 angeordnete Massepotential 26 direkt mit dem metallischen Körper 15 elektrisch verbunden ist.

## Patentansprüche

1. System (10, 11) mit einem im Wesentlichen metallischen Körper (15), welcher eine Ausnehmung (18) aufweist, und mit einer Sensorvorrichtung (20) , die in die Ausnehmung (18) eingebracht ist, wobei die Sensorvorrichtung (20) eine Sensoreinheit (22), eine Antenneneinheit (24) und ein Massepotential (26) aufweist, wobei die Antenneneinheit (24) elektrisch mit dem Massepotential (26) verbunden ist, **dadurch gekennzeichnet, dass**
das Massepotential (26) elektrisch mit dem metallischen Körper (15) verbunden ist.

2. System (10) nach Anspruch 1, **dadurch gekennzeichnet, dass** ein elektrisch leitfähiges Verbindungselement (28) zwischen dem Massepotential (26) und dem metallischen Körper (15) angeordnet ist.

3. System (10) nach Anspruch 2, **dadurch gekennzeichnet, dass** das elektrisch leitfähige Verbindungselement (28) ein Federelement ist, insbesondere ein metallisches Federelement.

4. System (10) nach Anspruch 2 oder 3, **dadurch gekennzeichnet, dass** das Verbindungselement (28) und die Antenneneinheit (24) in der Nähe einer Öffnung (19) der Ausnehmung (18) angeordnet sind, insbesondere an diese Öffnung (19) angrenzen.

5. System (11) nach Anspruch 1, **dadurch gekennzeichnet, dass** die Sensorvorrichtung (20) und/oder das Massepotential (26) der Sensorvorrichtung (20) derartig ausgestaltet sind, dass das Massepotential (26) direkt mit dem metallischen Körper (15) elektrisch verbunden ist.

6. System (10, 11) nach Anspruch 1 bis 5, **dadurch gekennzeichnet, dass** die Antenneneinheit (24) als Loop-Antenne ausgestaltet ist.

7. System (10, 11) nach Anspruch 1 bis 6, **dadurch gekennzeichnet, dass** die Sensorvorrichtung (20) von einem Gehäuse (30) umgeben ist, wobei das Gehäuse (30) eine derartig ausgestaltete Aussparung (31) aufweist, dass das Massepotential (26) durch diese Aussparung (31) hindurch elektrisch mit dem metallischen Körper (15) verbunden ist.

8. System (10, 11) nach einem der Ansprüche 1 bis 7, **dadurch gekennzeichnet, dass** die Sensoreinheit (22) einen Temperatursensor aufweist, welcher thermisch mit dem Massepotential (26) verbunden ist.

9. System (10, 11) nach einem der Ansprüche 1 bis 8, **dadurch gekennzeichnet, dass** der metallische Körper (15) als Walzenkörper ausgestaltet ist.

## Claims

1. System (10, 11) having a substantially metal body (15), which has a recess (18), and having a sensor apparatus (20), which is introduced into the recess (18), wherein the sensor apparatus (20) has a sensor unit (22), an antenna unit (24) and an earth potential (26), wherein the antenna unit (24) is electrically connected to the earth potential (26),
**characterized in that**
the earth potential (26) is electrically connected to the metal body (15).

2. System (10) according to Claim 1, **characterized in that** an electrically conductive connection element (28) is arranged between the earth potential (26) and the metal body (15).

3. System (10) according to Claim 2, **characterized in that** the electrically conductive connection element (28) is a spring element, in particular a metal spring element.

4. System (10) according to Claim 2 or 3, **characterized in that** the connection element (28) and the antenna unit (24) are arranged in the vicinity of an opening (19) of the recess (18), in particular adjoin this opening (19).

5. System (11) according to Claim 1, **characterized in that** the sensor apparatus (20) and/or the earth potential (26) of the sensor apparatus (20) are configured such that the earth potential (26) is directly electrically connected to the metal body (15).

6. System (10, 11) according to Claims 1 to 5, **characterized in that** the antenna unit (24) is in the form of a loop antenna.

7. System (10, 11) according to Claims 1 to 6, **characterized in that** the sensor apparatus (20) is surrounded by a housing (30), wherein the housing (30) has a cutout (31) configured in such a manner that the earth potential (26) is electrically connected to the metal body (15) through this cutout (31).

8. System (10, 11) according to one of Claims 1 to 7, **characterized in that** the sensor unit (22) has a temperature sensor which is thermally connected to the earth potential (26).

9. System (10, 11) according to one of Claims 1 to 8, **characterized in that** the metal body (15) is in the form of a roll body.

## Revendications

1. Système (10, 11), comprenant un corps (15) substantiellement métallique qui présente un creux (18), et un dispositif de détection (20) qui est introduit dans le creux (18), le dispositif de détection (20) présentant une unité de détection (22), une unité d'antenne (24) et un potentiel de masse (26), l'unité d'antenne (24) étant reliée électriquement au potentiel de masse (26),
**caractérisé en ce que** le potentiel de masse (26) est relié électriquement au corps métallique (15).

2. Système (10) selon la revendication 1, **caractérisé en ce qu'**un élément de liaison (28) électriquement conducteur est disposé entre le potentiel de masse (26) et le corps métallique (15).

3. Système (10) selon la revendication 2, **caractérisé en ce que** l'élément de liaison (28) électriquement conducteur est un élément ressort, en particulier un élément ressort métallique.

4. Système (10) selon la revendication 2 ou 3, **caractérisé en ce que** l'élément de liaison (28) et l'unité d'antenne (24) sont disposés à proximité d'une ouverture (19) du creux (18), en étant en particulier adjacents à cette ouverture (19).

5. Système (11) selon la revendication 1, **caractérisé en ce que** le dispositif de détection (20) et/ou le potentiel de masse (26) du dispositif de détection (20) est/sont configuré(s) de telle sorte que le potentiel de masse (26) est relié électriquement directement au corps métallique (15).

6. Système (10, 11) selon la revendication 1 à 5, **caractérisé en ce que** l'unité d'antenne (24) est configuré comme une antenne en boucle.

7. Système (10, 11) selon la revendication 1 à 6, **caractérisé en ce que** le dispositif de détection (20) est entouré d'un boîtier (30), le boîtier (30) présentant un évidement (31) configuré de telle sorte que le potentiel de masse (26) est relié électriquement au corps métallique (15) à travers cet évidement (31).

8. Système (10, 11) selon l'une quelconque des revendications 1 à 7, **caractérisé en ce que** l'unité de détection (22) présente un capteur de température qui est relié thermiquement au potentiel de masse (26).

9. Système (10, 11) selon l'une quelconque des revendications 1 à 8, **caractérisé en ce que** le corps métallique (15) est configuré sous la forme d'un corps de cylindre.
